# EUROPÄISCHE PATENTSCHRIFT

(11) **EP 4 062 733 B1**
(45) Veröffentlichungstag und Bekanntmachung des Hinweises auf die Patenterteilung: **07.06.2023**
(21) Anmeldenummer: 22161265.8
(22) Anmeldetag: 10.03.2022
(51) Int. Cl.: A01C 7/06, A01C 7/18, A01C 21/00, A01C 7/10

(54) **VERFAHREN ZUM ERMITTELN DER LAGE EINES PORTIONSSCHWERPUNKTS EINER GRANULATPORTION**
METHOD FOR DETERMINING THE POSITION OF THE CENTRE OF GRAVITY OF A GRANULE PORTION
PROCÉDÉ DE DÉTERMINATION DE L'EMPLACEMENT D'UN CENTRE DE GRAVITÉ D'UNE PORTION DES GRANULÉS

(30) Priorität: 22.03.2021 DE 102021106941
(43) Veröffentlichungstag der Anmeldung: 28.09.2022
(73) Patentinhaber: Amazonen-Werke H. Dreyer SE & Co. KG, 49205 Hasbergen (DE)
(72) Erfinder: Dertenkötter, Fabian, 48346 Ostbevern (DE); Hilbert, Florenz, 48282 Emsdetten (DE); Teckemeyer, Stephan, 49504 Lotte (DE); Trentmann, Markus, 49134 Wallenhorst (DE)
(74) Vertreter: Pelster Behrends Patentanwälte PartG mbB

(56) Entgegenhaltungen:
- EP-A1- 2 342 966
- EP-A1- 3 659 417
- US-A1- 2020 037 492

## Beschreibung

Die Erfindung betrifft ein Verfahren zum Ermitteln der Lage eines Portionsschwerpunkts einer Granulatportion nach der Lehre des Patentanspruchs 1 und die Verwendung der Lage eines Portionsschwerpunkts einer Granulatportion zum Kalibrieren einer landwirtschaftlichen Ausbringmaschine nach der Lehre des Patentanspruchs 10.

Um Kulturpflanzen auf einer landwirtschaftlichen Nutzfläche optimal mit Nährstoffen zu versorgen, geht man in einer Vielzahl von Anwendungsfällen dazu über, die konventionelle Bandapplikation von Dünger durch eine diskontinuierliche Ausbringung von Düngerportionen zu ersetzen. Bei der gleichzeitigen Ausbringung von Saatgut und Dünger sollen die Düngerportionen dabei einen vorgegebenen Längsabstand zu den Saatkörnern aufweisen, damit diese insbesondere während der Keim- und Auflaufphase optimal versorgt werden. Beispielhaft wird hierzu auf die EP 2 342 966 A1 verwiesen.

In diesem Zusammenhang hat sich herausgestellt, dass die von landwirtschaftlichen Maschinen erzeugbaren Düngerportionen eine ungleichmäßige Granulatkornverteilung aufweisen. Die ungleichmäßige Verteilung der Granulatkörner einer Düngerportion und deren Einfluss auf die Nährstoffversorgung von Pflanzen wurde bei der portionsweisen Ablage von Düngerportionen bisher nicht berücksichtigt.

Die der Erfindung zugrundeliegende Aufgabe besteht somit darin, die Nährstoffversorgung von Pflanzen durch Granulatportionen mit einer ungleichmäßigen Granulatkornverteilung zu verbessern.

Die Aufgabe wird gelöst durch ein Verfahren der eingangs genannten Art, wobei im Rahmen des erfindungsgemäßen Verfahrens eine Körnerverteilung der Granulatportion sensorisch erfasst wird und die Lage des Portionsschwerpunkts auf Grundlage der sensorisch erfassten Körnerverteilung berechnet wird.

Durch das Berechnen der Lage des Portionsschwerpunkts kann die Granulatportion und/oder gemeinsam mit dem Granulat auszubringendes Saatgut unter Berücksichtigung der Lage des Portionsschwerpunkts der Granulatportion abgelegt werden, wodurch eine optimale Nährstoffversorgung der aus dem Saatgut entstehenden Pflanzen gewährleistet wird. Die untersuchte Granulatportion wird entweder von einer landwirtschaftlichen Ausbringmaschine oder mittels eines Versuchsaufbaus erzeugt. Der Versuchsaufbau umfasst dabei beispielsweise mehrere Komponenten einer landwirtschaftlichen Ausbringmaschine, wie etwa einen Granulatportionierer und einen sich an den Granulatportionierer anschließenden Förderkanal, sodass mittels des Versuchsaufbaus die Portionserzeugung und die Portionsablage einer landwirtschaftlichen Ausbringmaschine nachgeahmt wird. Das Berechnen der Lage des Portionsschwerpunkts erfolgt vorzugsweise mittels einer elektronischen Datenverarbeitungseinrichtung. Die elektronische Datenverarbeitungseinrichtung kann beispielsweise Bestandteil der landwirtschaftlichen Ausbringmaschine oder des Versuchsaufbaus sein. Die Granulatportion kann beispielsweise eine Düngerportion sein. In diesem Fall sind die Granulatkörner Düngerkörner. Die erzeugte Düngerportion weist eine ungleichmäßige Granulatkornverteilung auf, d. h. die Granulatportion weist in Längsrichtung, also während des Förderns der Granulatportion in Förderrichtung bzw. nach dem Ablegen der Granulatportion in Fahrtrichtung, eine Ungleichverteilung, also insbesondere keine Kugel- oder Punktform auf.

Im Rahmen des erfindungsgemäßen Verfahrens kann auch die Lage des Portionsschwerpunkts von mehreren Granulatportionen ermittelt werden, sodass ein Lagemittelwert für den Portionsschwerpunkt über mehrere Granulatportionen bestimmt werden kann. Hierbei können beispielsweise zumindest fünf Granulatportionen berücksichtigt werden.

In einer bevorzugten Ausführungsform des erfindungsgemäßen Verfahrens wird die Körnerverteilung der Granulatportion mittels eines oder mehrerer optoelektronischer Sensoren erfasst. Der eine oder die mehreren optoelektronischen Sensoren können eine oder mehrere Lichtschranken oder ein Lichtgitter umfassen. Der eine oder die mehreren optoelektronischen Sensoren können ferner Bildsensoren einer Kamera sein. Die elektronische Datenverarbeitungseinrichtung ist vorzugsweise dazu eingerichtet, die Sensordaten des einen oder der mehreren optoelektronischen Sensoren beim Berechnen der Lage des Portionsschwerpunkts auszuwerten. Wenn der eine oder die mehreren optoelektronischen Sensoren Bildsensoren einer Kamera sind, führt die elektronische Datenverarbeitungseinrichtung zur Berechnung des Portionsschwerpunkts der Granulatportion eine Bildauswertung aus.

Es ist ferner ein erfindungsgemäßes Verfahren bevorzugt, bei welchem das sensorische Erfassen der Körnerverteilung der Granulatportion in einer oder mehreren Erfassungsebenen erfolgt. Demnach kann die Schwerpunktserfassung eindimensional oder mehrdimensional erfolgen. Wenn das sensorische Erfassen der Körnerverteilung der Granulatportion in mehreren Erfassungsebenen erfolgt, stehen die Erfassungsebenen vorzugsweise senkrecht aufeinander. Insofern kann beispielsweise die Längsverteilung, die Querverteilung und/oder die Höhenverteilung der Granulatkörner beim Berechnen der Lage des Portionsschwerpunkts berücksichtigt werden.

In einer weiteren bevorzugten Ausführungsform des erfindungsgemäßen Verfahrens ist die berechnete Lage des Portionsschwerpunkts die Lage des Masseschwerpunkts der Granulatportion. Im Hinblick auf die pflanzenbaulich optimale Ablage von Düngerportionen kommt dem Masseschwerpunkt eine besondere Bedeutung zu, da im Nahbereich des Masseschwerpunkts der Nährstoffeintrag in den Boden maximal ist. Insbesondere bei Mischdüngern mit Düngerkörnern unterschiedlicher Dichte kann es zur Bestimmung der Lage des Masseschwerpunkts der Granulatportion erforderlich sein, den erfassten Granulatkörnern eine Dichte oder eine Masse zuzuweisen, damit die Lage des Masseschwerpunkts einer Mischdüngerportion zuverlässig ermittelt werden kann. Die elektronische Datenverarbeitungseinrichtung kann entsprechende dünger- bzw. granulatspezifische Angaben, wie etwa die mittlere Korndichte oder die mittlere Kornmasse, beispielsweise aus einer Granulatdatenbank abrufen. Alternativ oder zusätzlich können der elektronischen Datenverarbeitungseinrichtung entsprechende dünger- bzw. granulatspezifische Angaben auch durch eine manuelle Eingabe zur Verfügung gestellt werden.

In einer anderen Ausführungsform des erfindungsgemäßen Verfahrens ist die berechnete Lage des Portionsschwerpunkts die Lage eines Flächenschwerpunkts oder die Lage des Volumenschwerpunkts der Granulatportion. Insbesondere bei der Schwerpunktsbestimmung von Mischdüngerportionen kann die Bestimmung des Masseschwerpunkts aufgrund fehlender Informationen zu den Düngersorten des Mischdüngers in Einzelfällen nicht möglich sein, sodass in diesen Fällen die Schwerpunktsbestimmung auf eine Fläche oder das Volumen der Granulatportion bezogen wird.

In einer weiteren bevorzugten Ausführungsform des erfindungsgemäßen Verfahrens bewegt sich die Granulatportion beim sensorischen Erfassen der Körnerverteilung der Granulatportion durch einen Erfassungsbereich. Der Erfassungsbereich stellt vorzugsweise den Bereich dar, in welchem ein oder mehrere optoelektronische Sensoren Granulatkörner detektieren können. Vorzugsweise fliegt die Granulatportion beim sensorischen Erfassen der Körnerverteilung der Granulatportion durch den Erfassungsbereich. Alternativ kann der Erfassungsbereich, beispielsweise durch ein Bewegen des einen oder der mehreren optoelektronischen Sensoren, entlang der Granulatportion bewegt werden. Vorzugsweise werden sämtliche sich zu einem Erfassungszeitpunkt in dem Erfassungsbereich befindenden Granulatkörner beim Erfassen der Körnerverteilung und/oder beim Berechnen der Lage des Portionsschwerpunkts berücksichtigt. Granulatkörner, welche sich zu einem Erfassungszeitpunkt außerhalb des Erfassungsbereichs befinden, werden beim Erfassen der Körnerverteilung und/oder beim Berechnen der Lage des Portionsschwerpunkts vorzugsweise nicht berücksichtigt.

In einer anderen bevorzugten Ausführungsform des erfindungsgemäßen Verfahrens bleiben innerhalb des Erfassungsbereichs erfasste und von einem Akkumulationsbereich der Granulatkörner beabstandete Granulatkörner beim Erfassen der Körnerverteilung und/oder beim Berechnen der Lage des Portionsschwerpunkts unberücksichtigt. Alternativ oder zusätzlich wird die Lage und/oder Größe des Erfassungsbereichs dynamisch angepasst, um von einem Akkumulationsbereich der Granulatkörner beabstandete Granulatkörner beim Erfassen der Körnerverteilung und/oder beim Berechnen der Lage des Portionsschwerpunkts nicht zu berücksichtigen. Auf diese Weise kann vermieden werden, dass Kornausreißer, d. h. Granulatkörner, welche einen Grenzabstand zu einem Akkumulationsbereich der Granulatkörner überschreiten, die Berechnung der Lage des Portionsschwerpunkts verfälschen.

In einer anderen Ausführungsform des erfindungsgemäßen Verfahrens wird ein die berechnete Lage des Portionsschwerpunkts umfassender Granulat- und/oder einstellungsspezifischer Kalibrierdatensatz in einer weitere granulat- und/oder einstellungsspezifische Kalibrierdatensätze umfassenden Kalibrierdatenbank gespeichert. Die berechnete Lage des Portionsschwerpunkts wird also in dem Kalibrierdatensatz einer Granulatsorte oder spezifischen Granulateigenschaften zugeordnet. Alternativ oder zusätzlich wird die berechnete Lage des Portionsschwerpunkts in dem Kalibrierdatensatz einer Maschineneinstellung zugeordnet. Die Maschineneinstellung kann die Aussaatstärke, das eingestellte Portionsgewicht, die eingestellte Fahrgeschwindigkeit und/oder die eingestellte Fördergeschwindigkeit für die Granulatportionen betreffen. Die in der Kalibrierdatenbank gespeicherten Kalibrierdatensätze werden vorzugsweise zum Abruf durch landwirtschaftliche Ausbringmaschinen oder mit signalleitend verbundenen Geräten bereitgestellt. Insofern ist es nicht erforderlich, dass die landwirtschaftlichen Ausbringmaschinen selbst den Portionsschwerpunkt ermitteln. Sofern in der Kalibrierdatenbank ein für den beabsichtigen Ausbringvorgang geeigneter Kalibrierdatensatz vorhanden ist, kann dieser durch die landwirtschaftliche Ausbringmaschine oder ein signalleitend mit der landwirtschaftlichen Ausbringmaschine verbundenes Gerät abgerufen werden. Das signalleitend mit der landwirtschaftlichen Ausbringmaschine verbundene Gerät kann beispielsweise ein Terminal, insbesondere ein Isobus-Terminal, oder ein mobiles Endgerät, insbesondere ein portables Mobilfunkgerät, sein.

In einer Weiterbildung des erfindungsgemäßen Verfahrens werden beim Berechnen der Lage des Portionsschwerpunkts granulatspezifische Korneigenschaften berücksichtigt. Die beim Berechnen berücksichtigten granulatspezifischen Korneigenschaften können die Korngröße, die Kornform und/oder die Dichte der Granulatkörner betreffen. Die granulatspezifischen Korneigenschaften können der Datenverarbeitungseinrichtung durch einen Datenabruf von einer Granulatdatenbank und/oder durch eine manuelle Eingabe bereitgestellt werden.

Die der Erfindung zugrundeliegende Aufgabe wird ferner durch eine Verwendung der Lage eines Portionsschwerpunkts einer eine ungleichmäßige Verteilung aufweisenden Granulatportion zum Kalibrieren einer landwirtschaftlichen Ausbringmaschine gelöst, wobei mittels der landwirtschaftlichen Ausbringmaschine Granulatportionen in Form von Düngerportionen auf eine landwirtschaftliche Nutzfläche ausbringbar sind. Beim Kalibrieren der landwirtschaftlichen Ausbringmaschine werden also Informationen bezüglich der Lage eines Portionsschwerpunkts verwendet. Vorzugsweise wird der Portionsschwerpunkt mittels eines Verfahrens nach einer der vorstehend beschriebenen Ausführungsformen ermittelt. Beim Kalibrieren der landwirtschaftlichen Ausbringmaschine können auch Portionsschwerpunkte von mehreren Granulatportionen berücksichtigt werden, sodass die Kalibrierung auf Grundlage eines Schwerpunktmittelwerts von mehreren Granulatportionen erfolgt. Hierzu können beispielsweise die Portionsschwerpunkte von fünf oder mehr als fünf Granulatportionen berücksichtigt werden. Die Berechnung des Schwerpunktmittelwerts kann laufend erfolgen, so dass die Kalibrierung sich selbsttätig geänderten Umgebungsbedingungen anpasst.

In einer bevorzugten Ausführungsform der erfindungsgemäßen Verwendung ist mit der landwirtschaftlichen Ausbringmaschine Saatgut in Form von vereinzelten Saatkörnern gemeinsam mit den Düngerportionen auf eine landwirtschaftliche Nutzfläche ausbringbar. Hierbei erfolgt die Kalibrierung derart, dass die vereinzelten Saatkörner in einem vorgegebenen Längsabstand zu dem Portionsschwerpunkt der Düngerportionen auf die landwirtschaftliche Nutzfläche abgelegt werden. Der vorgegebene Längsabstand zwischen den vereinzelten Saatkörnern und den Portionsschwerpunkten der Düngerportionen kann auch Null sein, sodass die Düngerportionen und die vereinzelten Saatkörner in unterschiedlichen Ablageebenen direkt übereinander auf der landwirtschaftlichen Nutzfläche abgelegt werden. In einer alternativen Ausführungsform der erfindungsgemäßen Verwendung ist mittels einem geeigneten Sensorsystem die Position zumindest einer Pflanze detektierbar und/oder aus einem Speichermittel abrufbar. Die Kalibrierung erfolgt dabei derart, dass der Portionsschwerpunkt der auf der landwirtschaftlichen Nutzfläche abgelegten Düngerportionen einen vorgegebenen Längsabstand zu den Pflanzenpositionen aufweist. Der vorgegebene Längsabstand zwischen den Pflanzenpositionen und den Portionsschwerpunkten der Düngerportionen kann auch Null sein, sodass die Düngerportionen und die aufgelaufenen Pflanzen in unterschiedlichen Ablageebenen direkt benachbart zueinander auf der landwirtschaftlichen Nutzfläche positioniert werden.

In einer bevorzugten Ausführungsform der erfindungsgemäßen Verwendung weist die landwirtschaftliche Ausbringmaschine einen Düngerportionierer zum Erzeugen von Düngerportionen und eine Vereinzelungseinrichtung zum Vereinzeln von Saatkörnern auf. Das Kalibrieren der landwirtschaftlichen Ausbringmaschine führt zu einem Betrieb des Düngerportionierers und der Vereinzelungseinrichtung, bei welchem die von der Vereinzelungseinrichtung vereinzelten Saatkörner in dem vorgegebenen Längsabstand zu dem Portionsschwerpunkt der von dem Düngerportionierer erzeugten Düngerportionen auf die landwirtschaftliche Nutzfläche abgelegt werden. Durch die Umsetzung einer derartigen Ablagebeziehung von Saatkörnern und Düngerportionen wird die optimale Nährstoffversorgung der auflaufenden Pflanzen gewährleistet.

Die erfindungsgemäße Verwendung wird ferner dadurch vorteilhaft weitergebildet, dass beim Steuern des Betriebs des Düngerportionierers und/oder der Vereinzelungseinrichtung der landwirtschaftlichen Ausbringmaschine während des Ausbringvorgangs eine Flugdauer der Düngerportionen berücksichtigt wird, wobei das Kalibrieren der landwirtschaftlichen Ausbringmaschine derart erfolgt, dass sich ein Endzeitpunkt der Flugdauer auf den Ablagezeitpunkt bezieht, an welchem der Portionsschwerpunkt einen Ablageort auf der landwirtschaftlichen Nutzfläche erreicht. Dadurch, dass sich der Endzeitpunkt der Flugdauer auf den Ablagezeitpunkt bezieht, an welchem der Portionsschwerpunkt seinen Ablageort auf der landwirtschaftlichen Nutzfläche erreicht, kann ein vorgegebener Längsabstand zwischen dem Portionsschwerpunkt und dem vereinzelten Saatkorn bei einer synchronisierten Ablage von vereinzelten Saatkörnern und Düngerportionen erreicht werden.

In einer weiteren bevorzugten Ausführungsform der erfindungsgemäßen Verwendung erfolgt das Kalibrieren der landwirtschaftlichen Ausbringmaschine unter Verwendung der ermittelten Lage des Portionsschwerpunkts vor einem Ausbringvorgang und der Kalibrierzustand der landwirtschaftlichen Maschine wird während des gesamten Ausbringvorgangs beibehalten. Die Kalibrierung der landwirtschaftlichen Ausbringmaschine kann dabei beispielsweise werksseitig vom Hersteller der landwirtschaftlichen Ausbringmaschine vorgenommen werden. Alternativ kann die Kalibrierung vor einem Ausbringvorgang von dem Maschinenbediener vorgenommen oder veranlasst werden. Beispielsweise weist die landwirtschaftliche Ausbringmaschine eine Kalibrierfunktion auf, in welcher der Portionsschwerpunkt der auszubringenden Düngerportionen bestimmt oder Informationen bezüglich des Portionsschwerpunkts der auszubringenden Düngerportionen von einer Kalibrierdatenbank abgerufen werden. Alternativ können Schwerpunktsinformationen zu den auszubringenden Düngerportionen auch manuell von einem Bediener durch eine Eingabe an der landwirtschaftlichen Ausbringmaschine oder einem mit der landwirtschaftlichen Ausbringmaschine verbundenen Gerät bereitgestellt werden.

Es ist darüber hinaus eine erfindungsgemäße Verwendung bevorzugt, bei welcher das Ermitteln der Lage des Portionsschwerpunkts durch die Ausbringmaschine mehrfach während eines Ausbringvorgangs erfolgt und das Kalibrieren der landwirtschaftlichen Ausbringmaschine unter Verwendung der ermittelten Lagen der Portionsschwerpunkte vorzugsweise mehrfach während des Ausbringvorgangs erfolgt. In diesem Fall ist die landwirtschaftliche Ausbringmaschine dazu eingerichtet, die Lage der Portionsschwerpunkte der Düngerportionen selbst zu ermitteln. In diesem Fall kann sich der Kalibrierzustand der landwirtschaftlichen Ausbringmaschine während des Ausbringvorgangs ändern, beispielsweise, weil sich die Lage des Portionsschwerpunkts der Düngerportionen während des Ausbringvorgangs ändert. Die Lage des Portionsschwerpunkts der Düngerportionen kann sich während des Ausbringvorgangs beispielsweise aufgrund von sich verändernden Düngereigenschaften ändern. Beispielsweise kann eine zunehmende Düngerfeuchtigkeit die Portionsform verändern. Ferner ist es vorstellbar, dass die landwirtschaftliche Ausbringmaschine Dünger aus unterschiedlichen Chargen mitführt, sodass es bei der Portionierung je nach Charge zu unterschiedlichen Körnerverteilungen kommt. Vorzugsweise erfolgt das Ermitteln der Lage des Portionsschwerpunkts für jede erzeugte Düngerportion und das Kalibrieren der landwirtschaftlichen Ausbringmaschine unter Verwendung der ermittelten Lagen der Portionsschwerpunkte erfolgt ebenfalls für jede erzeugte Düngerportion. Alternativ ist denkbar, dass das Ermitteln der Lage des Portionsschwerpunkts für zumindest drei, vorzugsweise fünf, erzeugte Düngerportionen erfolgt und das Kalibrieren der landwirtschaftlichen Ausbringmaschine erfolgt unter Verwendung eines Mittelwerts der ermittelten Lagen der Portionsschwerpunkte für die zumindest drei, vorzugsweise fünf, Düngerportionen.

Nachfolgend werden bevorzugte Ausführungsformen der Erfindung unter Bezugnahme auf die beiliegenden Zeichnungen näher erläutert und beschrieben. Dabei zeigen:
- Fig. 1: das Ermitteln der Lage eines Portionsschwerpunkts einer auf einer landwirtschaftlichen Nutzfläche abgelegten Granulatportion;
- Fig. 2: das Ermitteln der Lage eines Portionsschwerpunkts einer sich in einer Förderleitung befindenden Granulatportion;
- Fig. 3: das Ermitteln der Lage eines Portionsschwerpunkts einer aus einer Förderleitung abgegebenen Granulatportion vor dem Auftreffen auf eine landwirtschaftliche Nutzfläche; und
- Fig. 4: ein Ausbringaggregat einer landwirtschaftlichen Ausbringmaschine, welche unter Verwendung von Lageinformationen zu einem Portionsschwerpunkt einer Granulatportion kalibrierbar ist.

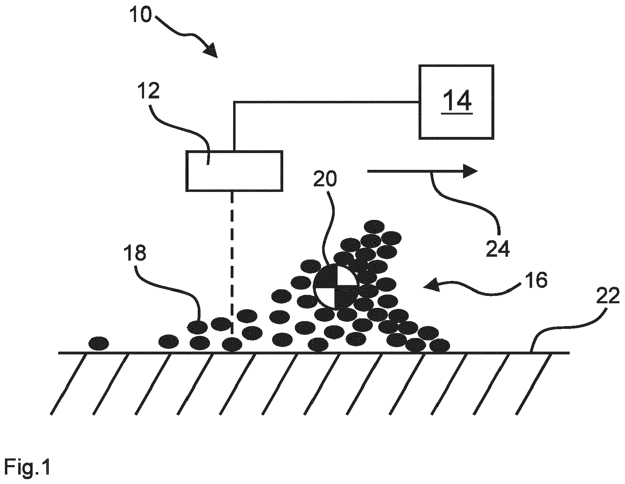

Die Fig. 1 zeigt ein Erfassungssystem 10, mittels welchem die Lage eines Portionsschwerpunkts 20 einer eine ungleichmäßige Verteilung aufweisenden Granulatportion 16 aus einer Vielzahl von Granulatkörnern 18 ermittelt werden kann. Das Erfassungssystem 10 kann beispielsweise Bestandteil eines Versuchsaufbaus oder Bestandteil einer landwirtschaftlichen Ausbringmaschine sein.

Das Erfassungssystem 10 weist einen Sensor 12 auf, mittels welchem die Körnerverteilung der auf der landwirtschaftlichen Nutzfläche 22 abgelegten Granulatportionen 16 sensorisch erfasst werden kann. Der Sensor 12 ist ein optoelektronischer Sensor und kann eine oder mehrere Lichtschranken oder ein Lichtgitter umfassen. Alternativ kann der Sensor 12 auch ein Bildsensor einer Kamera sein. Das Erfassungssystem 10 umfasst ferner eine Datenverarbeitungseinrichtung 14, mittels welcher die Lage des Portionsschwerpunkts 20 der Granulatportion 16 berechnet werden kann. Zur Berechnung der Lage des Portionsschwerpunkts 20 verwendet die Datenverarbeitungseinrichtung 14 die von dem Sensor 12 erfasste Körnerverteilung der Granulatportion 16.

Aufgrund der ungleichmäßigen Verteilung der Granulatkörner 18 der Granulatportion 16, also der Ungleichverteilung in Längsrichtung, liegt der Portionsschwerpunkt 20 der Granulatportion 16 nicht mittig in Bezug auf die Längserstreckung der Granulatportion 16, sondern im vorderen Drittel. Das Erfassungssystem 10 wird zur sensorischen Erfassung der Körnerverteilung der Granulatportion 16 entlang der Bewegungsrichtung 24 über die Granulatportion 16 bewegt. Wenn das Erfassungssystem 10 Bestandteil eines Versuchsaufbaus ist, erlaubt der Versuchsaufbau das horizontale Abfahren der Granulatportion 16. Wenn das Erfassungssystem 10 Bestandteil einer landwirtschaftlichen Ausbringmaschine ist, wird die Granulatportion 16 von der landwirtschaftlichen Ausbringmaschine überfahren.

Das sensorische Erfassen der Körnerverteilung erfolgt in mehreren Erfassungsebenen, nämlich in allen drei Raumrichtungen. Auf diese Weise kann die Lage eines Portionsschwerpunkts 20, welcher der Lage des Masseschwerpunkts der Granulatportion 16 entspricht, in allen Raumrichtungen bestimmt werden. Die Lage und Größe des Erfassungsbereichs wird durch die Datenverarbeitungseinrichtung 14 während des sensorischen Erfassens der Körnerverteilung der Granulatportion 16 dynamisch angepasst, sodass von einem Akkumulationsbereich der Granulatkörner 18 beabstandete Granulatkörner 18, sogenannte Kornausreißer, beim Erfassen der Körnerverteilung und beim Berechnen der Lage des Portionsschwerpunkts 20 nicht berücksichtigt werden. Auf diese Weise wird eine Verfälschung der Lage des Portionsschwerpunkts 20 durch Kornausreißer vermieden.

Die berechnete Lage des Portionsschwerpunkts 20 kann im Rahmen eines Kalibrierdatensatzes in einer Kalibrierdatenbank gespeichert werden. Der Kalibrierdatensatz ist dabei granulat- und einstellungsspezifisch und ordnet der Lage des ermittelten Portionsschwerpunkts 20 eine Granulatsorte und eine Maschineneinstellung zu. In der Kalibrierdatenbank sind weitere Kalibrierdatensätze gespeichert, welche durch landwirtschaftliche Ausbringmaschinen zum Zwecke der Kalibrierung abgerufen werden können. Der Abruf kann auch über ein Gerät erfolgen, welches mit einer landwirtschaftlichen Ausbringmaschine signalleitend verbunden ist, wie beispielsweise einem Terminal oder einem mobilen Endgerät.

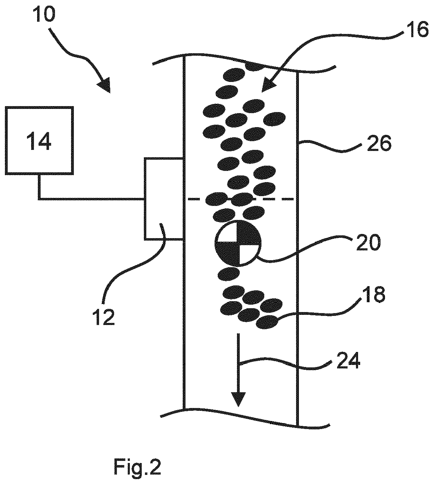

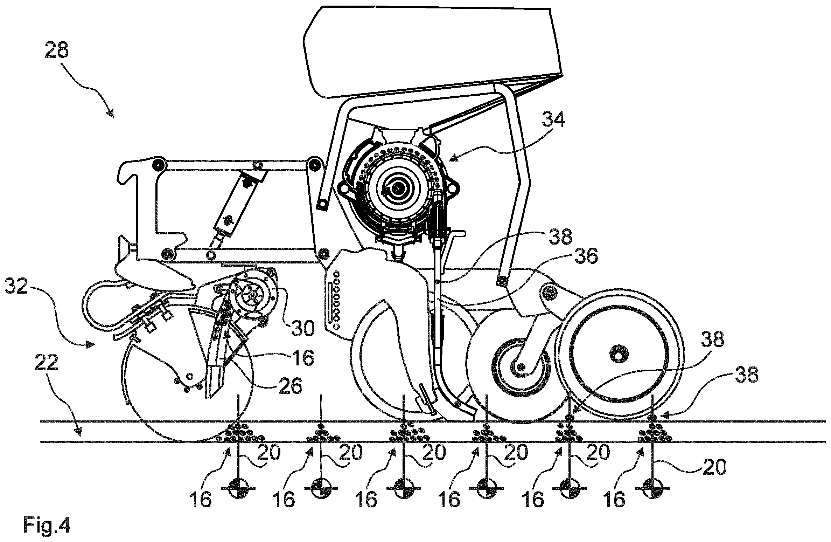

Die Fig. 2 zeigt eine als Düngerportion ausgebildete Granulatportion 16, welche sich durch eine Düngerförderleitung 26 bewegt. Die Düngerförderleitung 26 kann beispielsweise eine Schussleitung sein, über welche die in einem Düngerportionierer 30 (vgl. Fig. 4) erzeugte Düngerportion 16 in Richtung einer landwirtschaftlichen Nutzfläche 22 gefördert wird. An der Düngerförderleitung 26 ist ein Sensor 12 eines Erfassungssystems 10 angeordnet, über welchen die Körnerverteilung der Düngerportion 16 erfasst werden kann. Die Düngerportion 16 bewegt sich in Bewegungsrichtung 24 und passiert dabei den Detektionsbereich des Sensors 12. Der Sensor 12 ist mit einer Datenverarbeitungseinrichtung 14 des Erfassungssystems 10 verbunden, wobei die Datenverarbeitungseinrichtung die Lage des Portionsschwerpunkts 20 auf Grundlage der sensorisch erfassten Körnerverteilung berechnet.

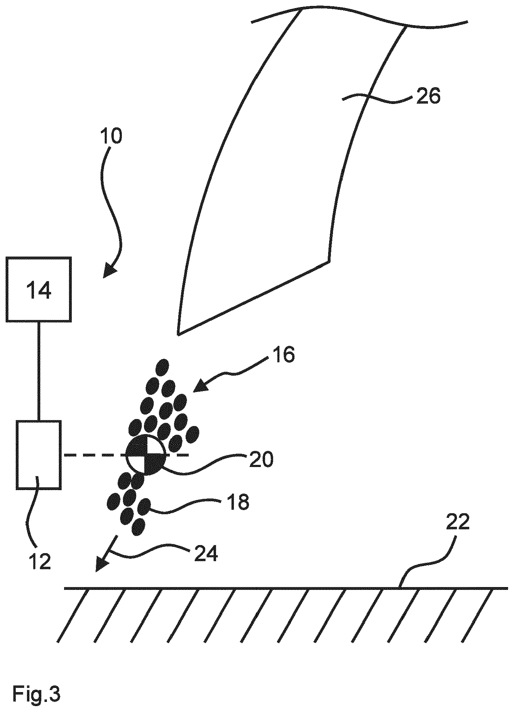

Die Fig. 3 zeigt die Ermittlung der Lage eines Portionsschwerpunkts 20 einer als Düngerportion ausgebildeten Granulatportion 16, welche sich in einer Flugphase befindet. Die Düngerportion 16 wurde durch die Düngerförderleitung 26 abgegeben, hat jedoch noch nicht die Oberfläche der landwirtschaftlichen Nutzfläche 22 erreicht.

Der Sensor 12 des Erfassungssystems ist unterhalb einer der landwirtschaftlichen Nutzfläche 22 zugewandten Öffnung der Düngerförderleitung 26 angeordnet und auf den Bereich zwischen der Düngerförderl eitung 26 und der landwirtschaftlichen Nutzfläche 22 gerichtet. Mittels des Sensors 12 wird die Körnerverteilung der Düngerportion 16 in der Flugphase sensorisch erfasst, sodass die Datenverarbeitungseinrichtung 14 diese Daten dazu nutzen kann, die Lage des Portionsschwerpunkts 20 der Düngerportion 16 zu ermitteln.

Die Fig. 4 zeigt ein Ausbringaggregat 28 einer landwirtschaftlichen Ausbringmaschine. Das Ausbringaggregat 28 weist einen Düngerportionierer 30 auf, mittels welchem Düngerportionen 16 erzeugt werden können. Die von dem Düngerportionierer 30 erzeugten Düngerportionen 16 werden dann über die Düngerförderleitung 26, welche auch als Schusskanal bezeichnet werden kann, in Richtung der landwirtschaftlichen Nutzfläche 22 geleitet. Die Düngerförderleitung 26 ist zwischen zwei Scheiben eines Düngeschars 32 angeordnet, wobei das Düngeschar 32 eine Ablagefurche für die mittels des Düngerportionierers 30 erzeugten Düngerportionen 16 erzeugt.

Das Ausbringaggregat 28 weist ferner eine Vereinzelungseinrichtung 34 auf, mittels welcher Saatkörner 38 vereinzelt werden können. Die vereinzelten Saatkörner 38 werden dann über die Saatkornförderleitung 36 in Richtung der landwirtschaftlichen Nutzfläche 22 gefördert.

Die landwirtschaftliche Ausbringmaschine ist zur kombinierten Ausbringung von Düngerportionen 16 und Saatkörnern 38 derart zu kalibrieren, dass die Düngerportionen 16 und die Saatkörner 38 in einem vorgegebenen Längsabstand zueinander auf der landwirtschaftlichen Nutzfläche 22 abgelegt werden. Der beabsichtigte Längsabstand ist in der dargestellten Bearbeitungssituation null, da die Düngerportionen 16 und die Saatkörner 38 übereinander ohne Längsversatz abgelegt werden sollen. Im Rahmen der Kalibrierung ist der Betrieb des Düngerportionierers 30 also mit dem Betrieb der Vereinzelungseinrichtung 34 zu synchronisieren.

Die Synchronisierung erfolgt in diesem Fall unter Berücksichtigung des Portionsschwerpunkts 20 der Düngerportionen 16. Der Düngerportionierer 30 und die Vereinzelungseinrichtung 34 werden so betrieben, dass die Saatkörner 38 oberhalb des Portionsschwerpunkts 20 der Düngerportionen 16 abgelegt werden. Hierzu ist bei der Kalibrierung der Portionsschwerpunkt 20 der Düngerportionen 16 zu berücksichtigen. Der Portionsschwerpunkt 20 der Granulatportionen 16 kann durch die landwirtschaftliche Ausbringmaschine selbst bestimmt werden oder von einer Kalibrierdatenbank abgerufen werden. Beim Abruf von einer Kalibrierdatenbank ist ein Kalibrierdatensatz abzurufen, welcher sich auf den verwendeten Maschinen- oder Ausbringaggregattyp, die auszubringende Düngersorte und die beabsichtigte Maschineneinstellung bezieht. Insofern ist es nicht zwingend erforderlich, dass die landwirtschaftliche Ausbringmaschine selbst eine Portionsschwerpunktsermittlung durchführt.

### Bezugszeichenliste

- 10: Erfassungssystem
- 12: Sensor
- 14: Datenverarbeitungseinrichtung
- 16: Granulatportionen
- 18: Granulatkörner
- 20: Portionsschwerpunkte
- 22: Nutzfläche
- 24: Bewegungsrichtung
- 26: Düngerförderleitung
- 28: Ausbringaggregat
- 30: Düngerportionierer
- 32: Düngeschar
- 34: Vereinzelungseinrichtung
- 36: Saatkornförderleitung
- 38: Saatkörner

## Patentansprüche

1. Verfahren zum Ermitteln der Lage eines Portionsschwerpunkts (20) einer von einer landwirtschaftlichen Ausbringmaschine oder mittels eines Versuchsaufbaus erzeugten und eine ungleichmäßige Verteilung aufweisenden Granulatportion (16) aus einer Vielzahl von Granulatkörnern (18), umfassend die Schritte:
- sensorisches Erfassen einer Körnerverteilung der Granulatportion (16); und
- Berechnen der Lage des Portionsschwerpunkts (20) auf Grundlage der sensorisch erfassten Körnerverteilung.

2. Verfahren nach Anspruch 1,
wobei die Körnerverteilung der Granulatportion (16) mittels eines oder mehrerer optoelektronischer Sensoren (12) erfasst wird.

3. Verfahren nach Anspruch 1 oder 2,
wobei das sensorische Erfassen der Körnerverteilung der Granulatportion (16) in einer oder mehreren Erfassungsebenen erfolgt.

4. Verfahren nach einem der vorstehenden Ansprüche,
wobei die berechnete Lage des Portionsschwerpunkts (20) die Lage des Masseschwerpunkts der Granulatportion (16) ist.

5. Verfahren nach einem der Ansprüche 1 bis 3,
wobei die berechnete Lage des Portionsschwerpunkts (20) die Lage eines Flächenschwerpunkts oder die Lage des Volumenschwerpunkts der Granulatportion (16) ist.

6. Verfahren nach einem der vorstehenden Ansprüchen,
wobei sich die Granulatportion (16) beim sensorischen Erfassen der Körnerverteilung der Granulatportion (16) durch einen Erfassungsbereich bewegt.

7. Verfahren nach Anspruch 6,
wobei
- innerhalb des Erfassungsbereichs erfasste und von einem Akkumulationsbereich der Granulatkörner (18) beabstandete Granulatkörner (18) beim Erfassen der Körnerverteilung und/oder beim Berechnen der Lage des Portionsschwerpunkts (20) unberücksichtigt bleiben; und/oder
- die Lage und/oder Größe des Erfassungsbereichs dynamisch angepasst wird, um von einem Akkumulationsbereich der Granulatkörner (18) beabstandete Granulatkörner (18) beim Erfassen der Körnerverteilung und/oder beim Berechnen der Lage des Portionsschwerpunkts (20) nicht zu berücksichtigen.

8. Verfahren nach einem der vorstehenden Ansprüche,
umfassend zumindest einen der folgenden Schritte:
- Speichern eines die berechnete Lage des Portionsschwerpunkts (20) umfassenden granulat- und/oder einstellungsspezifischen Kalibrierdatensatzes in einer weitere granulat- und/oder einstellungsspezifische Kalibrierdatensätze umfassenden Kalibrierdatenbank;
- Bereitstellen der in der Kalibrierdatenbank gespeicherten Kalibrierdatensätze zum Abruf durch landwirtschaftliche Ausbringmaschinen oder mit diesen signalleitend verbundenen Geräten.

9. Verfahren nach einem der vorstehenden Ansprüche,
wobei beim Berechnen der Lage des Portionsschwerpunkts (20) granulatspezifische Korneigenschaften berücksichtigt werden.

10. Verwendung einer Lage eines Portionsschwerpunkts (20) einer eine ungleichmäßige Verteilung aufweisenden Granulatportion (16), insbesondere einer gemäß einem der vorstehenden Ansprüche ermittelten Lage eines Portionsschwerpunkts (20) einer eine ungleichmäßige Verteilung aufweisenden Granulatportion (16), zum Kalibrieren einer landwirtschaftlichen Ausbringmaschine, mittels welcher Granulatportionen (16) in Form von Düngerportionen auf eine landwirtschaftliche Nutzfläche (22) ausbringbar sind.

11. Verwendung nach Anspruch 10,
wobei mit der landwirtschaftlichen Ausbringmaschine Saatgut in Form von vereinzelten Saatkörnern (38) gemeinsam mit den Düngerportionen (16) auf eine landwirtschaftliche Nutzfläche (22) ausbringbar sind und die Kalibrierung derart erfolgt, dass die vereinzelten Saatkörner (38) in einem vorgegebenen Längsabstand zu dem Portionsschwerpunkt (20) der Düngerportionen (16) auf die landwirtschaftliche Nutzfläche (22) abgelegt werden.

12. Verwendung nach Anspruch 11,
wobei die landwirtschaftliche Ausbringmaschine einen Düngerportionierer (30) zum Erzeugen von Düngerportionen (16) und eine Vereinzelungseinrichtung (34) zum Vereinzeln von Saatkörnern (38) aufweist und das Kalibrieren der landwirtschaftlichen Ausbringmaschine zu einem Betrieb des Düngerportionierers (30) und der Vereinzelungseinrichtung (34) führt, bei welchem die von der Vereinzelungseinrichtung (34) vereinzelten Saatkörner (38) in dem vorgegebenen Längsabstand zu dem Portionsschwerpunkt (20) der von dem Düngerportionierer (30) erzeugten Düngerportionen (16) auf die landwirtschaftliche Nutzfläche (22) abgelegt werden.

13. Verwendung nach Anspruch 12,
wobei beim Steuern des Betriebs des Düngerportionierers (30) und/oder der Vereinzelungseinrichtung (34) der landwirtschaftlichen Ausbringmaschine während des Ausbringvorgangs eine Flugdauer der Düngerportionen (16) berücksichtigt wird, wobei das Kalibrieren der landwirtschaftlichen Ausbringmaschine derart erfolgt, dass sich ein Endzeitpunkt der Flugdauer auf den Ablagezeitpunkt bezieht, an welchem der Portionsschwerpunkt (20) einen Ablageort auf der landwirtschaftlichen Nutzfläche (22) erreicht.

14. Verwendung nach einem der Ansprüche 10 bis 13,
wobei das Kalibrieren der landwirtschaftlichen Ausbringmaschine unter Verwendung der ermittelten Lage des Portionsschwerpunkts (20) vor einem Ausbringvorgang erfolgt und der Kalibrierzustand der landwirtschaftlichen Maschine während des gesamten Ausbringvorgangs beibehalten wird.

15. Verwendung nach einem der Ansprüche 10 bis 13,
wobei das Ermitteln der Lage des Portionsschwerpunkts (20) durch die Ausbringmaschine mehrfach während eines Ausbringvorgangs erfolgt und das Kalibrieren der landwirtschaftlichen Ausbringmaschine unter Verwendung der ermittelten Lagen der Portionsschwerpunkte vorzugsweise mehrfach während des Ausbringvorgangs erfolgt.

## Claims

1. Method for determining the position of a portion center of gravity (20) of a granulate portion (16), which is produced by an agricultural application machine or by means of a test setup and has a non-uniform distribution, of a plurality of granulate grains (18), comprising the steps of:
- detecting a grain distribution of the granulate portion (16) by sensors; and
- calculating the position of the portion center of gravity (20) on the basis of the sensor-detected grain distribution.

2. Method according to claim 1,
wherein the grain distribution of the granulate portion (16) is detected by means of one or more optoelectronic sensors (12).

3. Method according to either claim 1 or claim 2,
wherein the grain distribution of the granulate portion (16) is sensor detected in one or more detection planes.

4. Method according to any of the preceding claims,
wherein the calculated position of the portion center of gravity (20) is the position of the center of mass of the granulate portion (16).

5. Method according to any of claims 1 to 3,
wherein the calculated position of the portion center of gravity (20) is the position of a centroid or the position of the volume center of gravity of the granulate portion (16).

6. Method according to any of the preceding claims,
wherein, during sensor detection of the grain distribution of the granulate portion (16), the granulate portion (16) moves through a detection region.

7. Method according to claim 6, wherein
- during the detection of the grain distribution and/or during the calculation of the position of the portion center of gravity (20), granulate grains (18) detected within the detection region and spaced apart from an accumulation region of the granulate grains (18) remain disregarded; and/or
- the position and/or size of the detection region is dynamically adapted to disregard granulate grains (18) spaced apart from an accumulation region of the granulate grains (18) when detecting the grain distribution and/or when calculating the position of the portion center of gravity (20).

8. Method according to any of the preceding claims, comprising at least one of the following steps:
- storing a granulate- and/or adjustment-specific calibration data set comprising the calculated position of the portion center of gravity (20) in a calibration database comprising further granulate- and/or adjustment-specific calibration data sets;
- providing the calibration data sets stored in the calibration database for retrieval by agricultural application machines or devices signal-conductingly connected thereto.

9. Method according to any of the preceding claims,
wherein granulate-specific grain properties are taken into account when calculating the position of the portion center of gravity (20).

10. Use of a position of a portion center of gravity (20) of a granulate portion (16) which has a non-uniform distribution, in particular a position, determined according to any of the preceding claims, of a portion center of gravity (20) of a granulate portion (16) having a non-uniform distribution for calibrating an agricultural application machine, by means of which granulate portions (16) in the form of fertilizer portions can be applied onto farmland (22).

11. Method according to claim 10,
wherein seed in the form of separated seed grains (38) can be applied together with the fertilizer portions (16) onto farmland (22) by the agricultural application machine, and the calibration takes place in such a way that the separated seed grains (38) are deposited on the farmland (22) at a predetermined longitudinal distance from the portion center of gravity (20) of the fertilizer portions (16).

12. Use according to claim 11,
wherein the agricultural application machine has a fertilizer portioner (30) for producing fertilizer portions (16) and a separating device (34) for separating seed grains (38), and the calibration of the agricultural application machine leads to an operation of the fertilizer portioner (30) and the separating device (34), in which operation the seed grains (38) separated by the separating device (34) are deposited on the farmland (22) at the predetermined longitudinal distance from the portion center of gravity (20) of the fertilizer portions (16) produced by the fertilizer portioner (30).

13. Use according to claim 12,
wherein when controlling the operation of the fertilizer portioner (30) and/or the separating device (34) of the agricultural application machine, a flight duration of the fertilizer portions (16) is taken into account during the application process, wherein the agricultural application machine is calibrated such that an end time of the flight duration relates to the deposition time at which the portion center of gravity (20) reaches a deposition location on the farmland (22).

14. Use according to any of claims 10 to 13,
wherein the agricultural application machine is calibrated using the determined position of the portion center of gravity (20) prior to an application process and the calibration state of the agricultural machine is maintained during the entire application process.

15. Use according to any of claims 10 to 13,
wherein the position of the portion center of gravity (20) is determined by the application machine several times during an application process and the agricultural application machine is calibrated, preferably several times during the application process, using the determined positions of the portion centers of gravity.

## Revendications

1. Procédé permettant de déterminer la position d'un centre de gravité de portion (20) d'une portion de granulat (16), constituée d'une pluralité de grains de granulat (18), générée par une machine d'épandage agricole ou au moyen d'un montage d'essai et présentant une distribution irrégulière, comprenant les étapes de :
- détection sensorielle d'une distribution de grains de la portion de granulat (16) ; et
- calcul de la position du centre de gravité de portion (20) sur la base de la distribution de grains détectée de manière sensorielle.

2. Procédé selon la revendication 1,
dans lequel la distribution de grains de la portion de granulat (16) est détectée au moyen d'un ou de plusieurs capteurs optoélectroniques (12).

3. Procédé selon la revendication 1 ou 2,
dans lequel la détection sensorielle de la distribution de grains de la portion de granulat (16) a lieu dans un ou plusieurs plans de détection.

4. Procédé selon l'une des revendications précédentes,
dans lequel la position calculée du centre de gravité de portion (20) est la position du centre de gravité de masse de la portion de granulat (16).

5. Procédé selon l'une des revendications 1 à 3,
dans lequel la position calculée du centre de gravité de portion (20) est la position d'un centre de gravité de surface ou la position du centre de gravité de volume de la portion de granulat (16).

6. Procédé selon l'une des revendications précédentes,
dans lequel la portion de granulat (16) se déplace à travers une zone de détection lors de la détection sensorielle de la distribution de grains de la portion de granulat (16).

7. Procédé selon la revendication 6, dans lequel
- les grains de granulat (18) détectés dans la zone de détection et éloignés d'une zone d'accumulation des grains de granulat (18) ne sont pas pris en compte lors de la détection de la distribution de grains et/ou lors du calcul de la position du centre de gravité de portion (20) ; et/ou
- la position et/ou la taille de la zone de détection sont adaptées de manière dynamique pour ne pas prendre en compte des grains de granulat (18) éloignés d'une zone d'accumulation des grains de granulat (18) lors de la détection de la distribution de grains et/ou lors du calcul de la position du centre de gravité de portion (20).

8. Procédé selon l'une des revendications précédentes, comprenant au moins l'une des étapes suivantes :
- enregistrement d'un jeu de données d'étalonnage spécifique au granulat et/ou au réglage et comprenant la position calculée du centre de gravité de portion (20) dans une base de données d'étalonnage comprenant d'autres jeux de données d'étalonnage spécifiques au granulat et/ou au réglage ;
- fourniture des jeux de données d'étalonnage enregistrés dans la base de données d'étalonnage à des fins de consultation par des machines d'épandage agricoles ou des appareils reliés par conduction de signaux à celles-ci.

9. Procédé selon l'une des revendications précédentes,
dans lequel des propriétés de grain spécifiques au granulat sont prises en compte lors du calcul de la position du centre de gravité de portion (20).

10. Utilisation d'une position d'un centre de gravité de portion (20) d'une portion de granulat (16) présentant une distribution irrégulière, en particulier d'une position d'un centre de gravité de portion (20), déterminée selon l'une des revendications précédentes, d'une portion de granulat (16) présentant une distribution irrégulière, pour l'étalonnage d'une machine d'épandage agricole au moyen de laquelle des portions de granulat (16) peuvent être épandues sous forme de portions d'engrais sur une surface utile agricole (22).

11. Utilisation selon la revendication 10,
dans laquelle la machine d'épandage agricole permet d'épandre des semences sous forme de graines de semence (38) séparées conjointement avec les portions d'engrais (16) sur une surface utile agricole (22) et l'étalonnage a lieu de telle sorte que les graines de semence (38) séparées sont déposées sur la surface utile agricole (22) à une distance longitudinale prédéfinie par rapport au centre de gravité de portion (20) des portions d'engrais (16).

12. Utilisation selon la revendication 11,
dans laquelle la machine d'épandage agricole présente une portionneuse d'engrais (30) destinée à générer des portions d'engrais (16) et un dispositif de séparation (34) destiné à séparer des graines de semence (38), et l'étalonnage de la machine d'épandage agricole conduit à un fonctionnement de la portionneuse d'engrais (30) et du dispositif de séparation (34) au cours duquel les graines de semence (38) séparées par le dispositif de séparation (34) sont déposées sur la surface utile agricole (22) à la distance longitudinale prédéfinie par rapport au centre de gravité de portion (20) des portions d'engrais (16) générées par la portionneuse d'engrais (30).

13. Utilisation selon la revendication 12,
dans laquelle, lors de la commande du fonctionnement de la portionneuse d'engrais (30) et/ou du dispositif de séparation (34) de la machine d'épandage agricole pendant le processus d'épandage, un temps de vol des portions d'engrais (16) est pris en compte, l'étalonnage de la machine d'épandage agricole ayant lieu de telle sorte qu'un moment final du temps de vol se réfère au moment de dépôt auquel le centre de gravité de portion (20) atteint un site de dépôt sur la surface utile agricole (22).

14. Utilisation selon l'une des revendications 10 à 13,
dans laquelle l'étalonnage de la machine d'épandage agricole a lieu à l'aide de la position déterminée du centre de gravité de portion (20) avant un processus d'épandage, et l'état d'étalonnage de la machine agricole est conservé tout au long du processus d'épandage.

15. Utilisation selon l'une des revendications 10 à 13,
dans laquelle la détermination de la position du centre de gravité de portion (20) par la machine d'épandage a lieu plusieurs fois pendant un processus d'épandage, et l'étalonnage de la machine d'épandage agricole à l'aide des positions déterminées des centres de gravité de portion a lieu de préférence plusieurs fois pendant le processus d'épandage.
